# EUROPÄISCHE PATENTSCHRIFT

(11) **EP 2 118 509 B1**
(45) Veröffentlichungstag und Bekanntmachung des Hinweises auf die Patenterteilung: **09.11.2011**
(21) Anmeldenummer: 08717154.2
(22) Anmeldetag: 27.02.2008
(51) Int. Cl.: F16D 27/00, F16D 23/12

(54) **ELEKTROMECHANISCHER KUPPLUNGSAKTUATOR**
ELECTRO-MECHANICAL COUPLING ACTUATOR
ACTIONNEUR D'EMBRAYAGE ÉLECTROMÉCANIQUE

(30) Priorität: 10.03.2007 DE 102007011766
(43) Veröffentlichungstag der Anmeldung: 18.11.2009
(73) Patentinhaber: ZF Friedrichshafen AG, 88038 Friedrichshafen (DE)
(72) Erfinder: ACKER, Andreas, 88074 Meckenbeuren (DE); MIEHLE, Frank, 88090 Immenstaad (DE)
(86) Internationale Anmeldenummer: PCT/EP2008/052342
(87) Internationale Veröffentlichungsnummer: WO 2008/110457

(56) Entgegenhaltungen:
- WO-A-03/087609
- WO-A-2004/053347
- DE-A1- 10 313 739
- US-A- 6 012 561

## Beschreibung

Die vorliegende Erfindung betrifft einen elektromechanischen Kupplungsaktuator zum Betätigen einer Kupplung eines automatisierten Schaltgetriebes eines Fahrzeuges gemäß der im Oberbegriff des Patentanspruches 1 näher definierten Art. Ein gattungsgemäßer Kupplungsaktuator ist aus WO-A-03/087609 bekannt.

Ein anderer elektromechanischer Kupplungsaktuator ist aus der Druckschrift EP 0 716 242 B1 bekannt. Der Kupplungsaktuator umfasst einen Elektromotor als Antrieb, der mit einem Ausrückmechanismus gekoppelt ist.

Der Ausrückmechanismus umfasst ein koaxial zu einer Getriebewelle angeordnetes Gehäuse und stützt sich an einer getriebegehäuseseitigen Halterung ab. Die Drehbewegung des Elektromotors wird über eine Schnecke in eine Axialbewegung zum Betätigen des Ausrücklagers der Kupplung umgesetzt, wobei die Schnecke mit einer Verzahnung an dem Gehäuse in Eingriff steht. Dazu stützt sich das Gehäuse an seiner Innenseite an einem Steilgewinde ab, so dass das drehende Gehäuse zum Betätigen des Ausrücklagers in axiale Richtung bewegt wird.

Ein weiterer die Ausrückbewegung über ein Gewinde übertragener Kupplungsaktuator ist aus der Druckschrift DE 41 40 122 C2 bekannt. Als Antrieb ist auch dort ein Elektromotor vorgesehen, der über ein die Übersetzung veränderndes Wälzgetriebe eine Schraubspindel eines Schraubgetriebes antreibt, um die Drehbewegung des Elektromotors in eine axiale Bewegung zum Betätigen der Kupplung umzuwandeln. Der Schraubeingriff zwischen der Spindelmutter und der Schraubspindel erfolgt durch einen reibungsarmen Kugelumlauf.

Aus der Druckschrift US 5,910,061 ist ein weiterer Kupplungsaktuator bekannt, welcher ein Kupplungssteuergerät zur Ansteuerung einer elektromagnetischen Spule umfasst, welche durch Energiebeaufschlagung derart angeregt wird, dass ein Kupplungsring betätigt wird, um letztendlich eine Betätigungskraft über ein Planetengetriebe auf eine Druckplatte der Kupplung zum Betätigen derselben auszuüben.

Die bekannten Kupplungsaktuatoren benötigen eine Vielzahl von Bauteilen für den Ausrückmechanismus, um die Kupplung in gewünschter Weise betätigen zu können. Somit sind die bekannten Kupplungsaktuatoren kostenintensiv und erfordern einen erheblichen Bauraum.

Demnach liegt der vorliegenden Erfindung die Aufgabe zugrunde, einen elektromechanischen Kupplungsaktuator der eingangs beschriebenen Gattung vorzuschlagen, welcher möglichst einfach aufgebaut ist und einen geringen Bauraumbedarf hat. Außerden soll der Kupplungsaktuator die Einstellung möglicher Einbautoleranzen zwischen der Kupplung und dem Getriebe erlauben

Diese Aufgabe wird erfindungsgemäß durch die Merkmale des Patentanspruches 1 gelöst. Weitere vorteilhafte Ausgestaltungen ergeben sich insbesondere aus den Unteransprüchen.

Demnach wird ein elektromechanischer Kupplungsaktuator an einer Getriebewelle zum Betätigen einer Kupplung eines automatisierten Schaltgetriebes oder dergleichen eines Fahrzeuges vorgeschlagen. Der erfindungsgemäße Kupplungsaktuator weist als Antrieb einen Elektromotor und einen die Drehbewegung des Elektromotors in eine Axialbewegung des Ausrücklagers der Kupplung umwandelnden Ausrückmechanismus auf, der koaxial zur Getriebewelle in der Art eines elektromechanischen Zentralausrückers angeordnet ist, wobei der Ausrückmechanismus ein Drehgehäuse umfasst, an dem ein erstes Hülsenelement angeordnet ist, welches in axialer Richtung mit einem zweiten, korrespondieren Hülsenelement zum axialen Verschieben des Ausrücklagers in Wirkverbindung steht, wobei an dem zweiten Hülsenelement kupplungsseitig eine Zwischenhülse angeordnet ist, welche überlappend in einer Innendurchmesserstufe des zweiten Hülsenelements anliegt. Infolgedessen kann ein gewünschter Abstand zwischen diesen beiden Bauteilen zum Ausgleich von Bauteiltoleranzen und zum Spielausgleich eingestellt werden.

Auf diese Weise wird ein konstruktiv besonders einfach ausgestalteter Ausrückmechanismus bei dem erfindungsgemäßen Kupplungsaktuator realisiert, der aufgrund seiner kompakten Anordnung und seiner wenigen erforderlichen Bauteile auch besonders bauraumsparend in dem Getriebegehäuse untergebracht werden kann. Die sich durch die Bauteilreduktion ergebene kompakte Bauweise erlaubt die Betätigung der Kupplung auch z. B. ohne die Verwendung einer Ausrückgabel.

Im Rahmen einer möglichen Ausführungsform der vorliegenden Erfindung kann vorgesehen sein, dass das Drehgehäuse mit dem ersten Hülsenelement an einem Außengehäuse oder dergleichen drehbar gelagert ist. Infolge dessen sind Drehbewegungen des ersten Hülsenelements möglich, ohne dass dabei eine axiale Bewegung erfolgt. Somit kann das zweite Hülsenelement, welches vorzugsweise drehfest an dem Außengehäuse gelagert ist, durch die Drehbewegung des ersten Hülsenelements axial verschoben werden, da die beiden Hülsenelemente in entsprechender Wirkverbindung stehen.

Um die Wirkverbindung zwischen den beiden Hülsenelementen auf einfachste Weise zu realisieren, können die einander zugewandten axialen Stirnseitenbereiche oder auch andere Bereiche der Hülsenelemente geeignet profiliert sein. Es können beliebige Profilierungen verwendet werden, die es ermöglichen, dass die Drehbewegung des ersten Hülsenelements in eine axiale Bewegung des zweiten Hülsenelements umgewandelt wird.

Vorzugsweise können die Hülsenelemente als Profilierung z. B. Ausnehmungen oder dergleichen aufweisen. Diese Ausnehmungen können periodisch ausgeführt sein, sodass sie einen etwa rampenförmigen Verlauf der Stirnseitenbereiche bilden. Es sind auch andere Verläufe an den einander zugewandten Stirnseitenbereiche der Hülsenelemente möglich.

Unabhängig von dem gewählten Verlauf der Stirnseitenbereiche sollen diese quasi formschlüssig ineinander greifen, so dass die Stirnseitenbereiche durch eine Drehung des ersten Hülsenelements entlang ihrer profilierten Formen gleiten können. Beispielsweise bei einem rampenförmigen Verlauf der einander zugewandten Stirnseitenbereiche kann das erste Hülsenelement aufgrund des gewählten Rampenwinkels der Rampe das zweite Hülsenelement automatisch axial verschieben. Der Rampenwinkel der Rampe gibt dabei den Umfang der axialen Bewegung infolge der Drehung vor. Bei den rampenförmigen Verläufen ist der Rampenwinkel der Rampe im Wesentlichen konstant. Es sind aber auch andere Formen denkbar.

Eine nächste Weiterbildung der Erfindung kann vorsehen, dass die Zwischenhülse über zumindest ein Federelement oder dergleichen an dem Ausrücklager der Kupplung angeordnet ist. Auf diese Weise kann eine vorbestimmte Vorspannkraft auf das Ausrücklager auch im eingekuppelten Zustand aufgebracht werden. Es sind auch andere Verbindungsmöglichkeiten denkbar.

Eine konstruktiv einfache Möglichkeit einen Antrieb des Drehgehäuses des Ausrückmechanismus zu realisieren, liegt darin, dass die Abtriebsseite des Elektromotors mit einem Zwischenrad oder dergleichen gekoppelt ist, welches das Drehgehäuse antreibt. Dazu kann beispielsweise das Zwischenrad mit einem Zahnsegment oder dergleichen des Drehgehäuses in Eingriff stehen. Infolgedessen kann die Drehbewegung des Elektromotors in eine entsprechende Drehbewegung des Drehgehäuses zum Betätigen der Kupplung umgesetzt werden.

Um die Drehbewegung bzw. die Schwenkbewegung des Drehgehäuses zu führen, kann im Rahmen einer nächsten Ausgestaltung der Erfindung vorgesehen sein, dass das Drehgehäuse mit einem schwenkbaren Führungselement, wie z. B. einem Federbein oder dergleichen verbunden ist. Infolgedessen wird die Schwenkbewegung des Drehgehäuses durch das gelenkig angebundene Führungselement geführt. Zudem kann durch einen verwendeten Kraftspeicher auch eine Kraftunterstützung erfolgen, um den Elektromotor bei der Betätigung der Kupplung zu unterstützen.

In einer weiteren vorteilhaften Ausgestaltung können die beiden Hülsenelemente über einen Spindelantrieb miteinander verbunden sein, wozu der Innenmantel des einen der Hülsenelemente und der Außenmantel des anderen Hülsenelementes profiliert sind. Vorzugsweise eignet sich dazu eine Kugelumlaufspindel.

Es ist auch denkbar, dass der Elektromotor über eine Übersetzung, wie z. B. einen Riemenantrieb oder andere Getriebe mit dem Ausrückmechanismus gekoppelt ist. Vorzugsweise kann der Elektromotor an dem Außengehäuse angeflanscht sein.

Nachfolgend wird die vorliegende Erfindung anhand der Zeichnungen näher erläutert.

Es zeigen:
- Fig. 1: eine geschnittene Teilansicht eines Getriebegehäuses mit einer Kupplung und einer möglichen Ausführungsvariante eines elektromechanischen Kupplungsaktuators;
- Fig. 2: eine vergrößerte Ansicht des Kupplungsaktuators gemäß Fig. 1;
- Fig. 3: eine vergrößerte quer geschnittene Ansicht gemäß Fig. 2;
- Fig. 4: eine Teilansicht einer Draufsicht auf in die Ebene abwickelte Hülsenelemente des Kupplungsaktuators und
- Fig. 5: eine geänderte Ausführung mit Spindelantrieb.

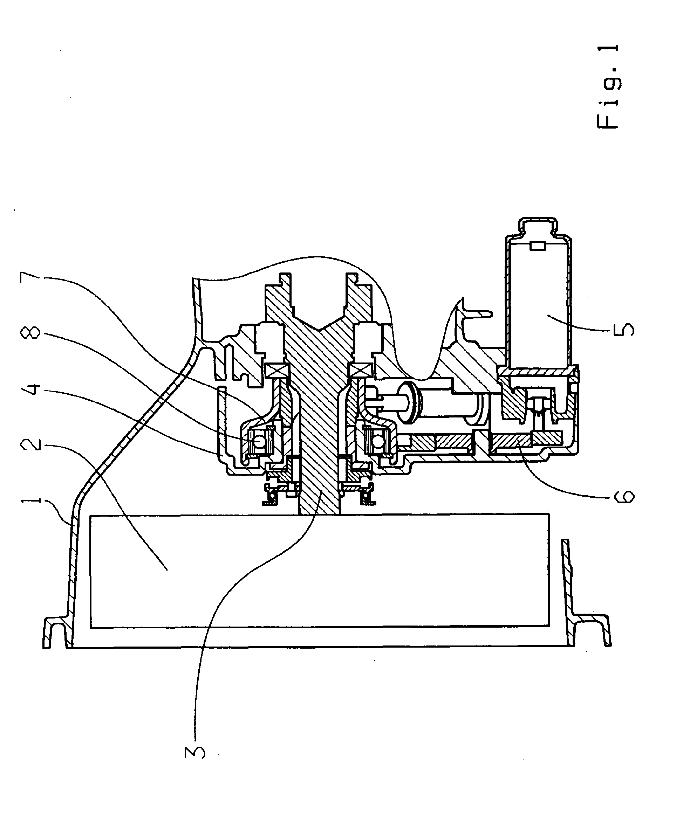

In den Fig. 1 bis 4 ist eine mögliche Ausführungsform eines elektromechanischen Kupplungsaktuators gezeigt. Der erfindungsgemäße Kupplungsaktuator ist in einem Getriebegehäuse 1 eines automatisierten Schaltgetriebes eines Fahrzeuges angeordnet. In dem Getriebegehäuse 1 ist eine zu betätigende Kupplung 2 aufgenommen.

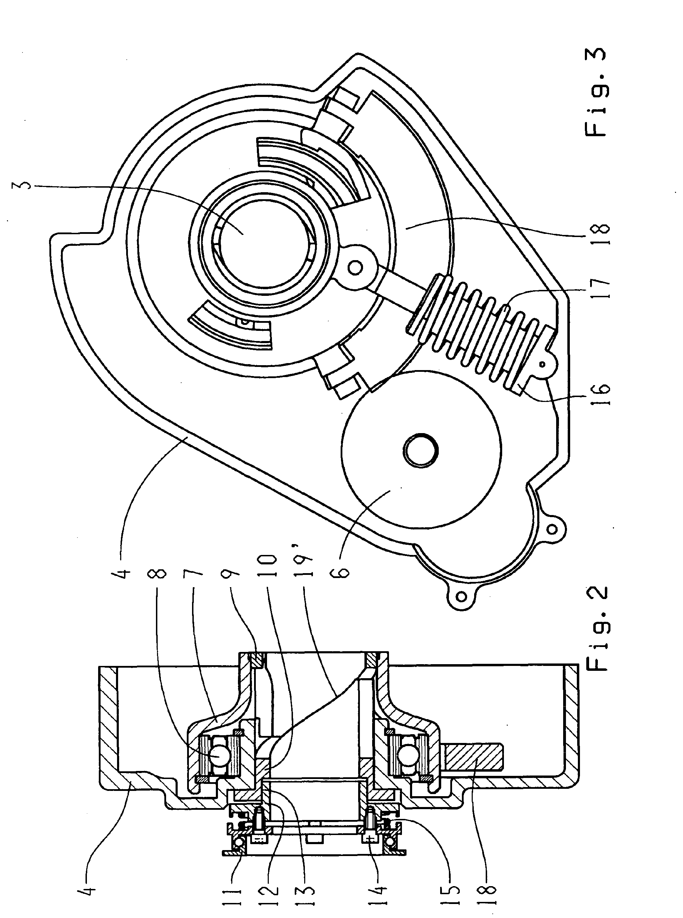

Der in Fig. 2 vergrößert dargestellte Kupplungsaktuator ist koaxial zu der Getriebewelle 3 angeordnet. Der Kupplungsaktuator besitzt ein Außengehäuse 4, an dem ein Elektromotor 5 als Antrieb angeflanscht ist. Die Drehbewegung des Elektromotors 5 wird über ein Zwischenrad 6 zu einem Ausrückmechanismus des Kupplungsaktuators übertragen. Der Ausrückmechanismus umfasst im Wesentlichen ein Drehgehäuse 7, welches drehbar über ein Lager 8 an dem Außengehäuse 4 gelagert ist.

Das Drehgehäuse 7 ist mit einem ersten Hülsenelement 9 verbunden, so dass die Drehbewegung des Drehgehäuses 7 auf das erste Hülsenelement 9 übertragen wird. Das erste, drehbar gelagerte Hülsenelement 9 steht in axialer Richtung mit einem zweiten korrespondierenden Hülsenelement 10 zum axialen Verschieben des Ausrücklagers 11 in Wirkverbindung. Das zweite Hülsenelement 10 ist im Gegensatz zum ersten Hülsenelement 9 drehfest an dem Außengehäuse 4 gelagert, so dass durch die Drehung des ersten Hülsenelements 9 eine axiale Bewegung des zweiten Hülsenelements 10 erreicht werden kann.

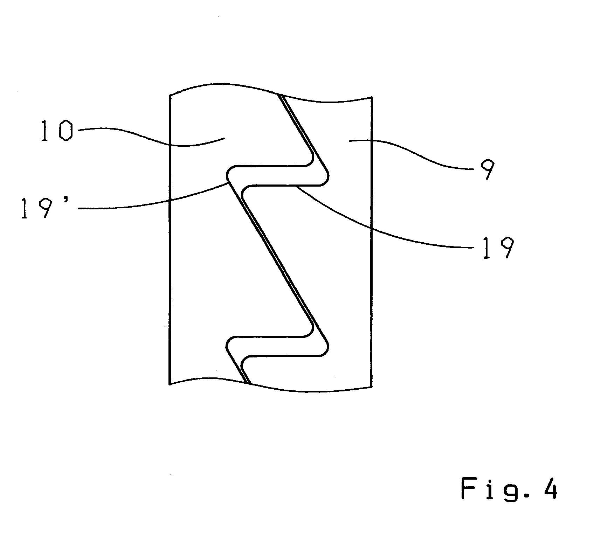

Die Wirkverbindung zwischen den beiden Hülsenelementen 9, 10 wird durch eine geeignete Profilierung der einander zugewandten axialen Stirnseitenbereiche der Hülsenelemente 9, 10 realisiert. Die Profilierung ist als etwa rampenförmiger Verlauf 19, 19' bei den Hülsenelementen 9, 10 ausgeführt, wie dies insbesondere aus Fig.4 ersichtlich ist.

In Fig. 4 sind die Hülsenelemente 9, 10 in eine Ebene abgewickelt dargestellt. Aus dieser Teilansicht wird deutlich, dass die rampenförmigen Verläufe 19, 19' der Hülsenelemente 9, 10 derart korrespondieren, dass diese zumindest teilweise je nach Betätigungszustand formschlüssig aneinander liegen. Die Spitzen der Rampen jedes rampenförmigen Verlaufes 19, 19' sind bei der gezeigten Ausführungsform abgeflacht. Die Rampen sind mit einem vorbestimmten Winkel bzw. mit einer vorbestimmten Steigung ausgeführt.

Durch die Drehung des Drehgehäuses 7 und des damit verbundenen ersten Hülsenelements 9 können die rampenförmigen Verläufe 19, 19' der zugewandten Stirnseitenbereiche aneinander gleiten. In Abhängigkeit der Steigung bzw. des Winkels der Rampen der Verläufe 19, 19' kann das zweite Hülsenelement 10 in Abhängigkeit der Drehrichtung des ersten Hülsenelements 9 axial in der Zeichnungsebene der Fig. 1 und 2 nach links oder rechts bewegt werden. Aufgrund der Axialbewegung kann die Kupplung 2 durch das zweite Hülsenelement 10 ausgerückt oder eingerückt werden.

An dem zweiten Hülsenelement 10 schließt sich kupplungsseitig eine Zwischenhülse 12 an, wie aus Fig. 2 ersichtlich ist. Die Zwischenhülse 12 liegt überlappend an einer Innendurchmesserstufe 13 des zweiten Hülsenelements 10 an. Das Ausrücklager 11 zum Betätigen der Kupplung 2 ist über Befestigungsschrauben 14 an der Zwischenhülse 12 befestigt. Um eine Vorspannkraft auf das Ausrücklager 14 auch im eingekuppelten Zustand aufbringen zu können, sind mehrere Federn 15 zwischen der Zwischenhülse 12 und dem Ausrücklager 11 vorgesehen. Durch das Zwischenstück 12 können Einbautoleranzen von Kupplung und Getriebe ausgeglichen werden.

Insbesondere aus Fig. 3 ist ersichtlich, dass die Schwenkbewegung des Drehgehäuses 7 des Ausrückmechanismus über ein Führungselement 16 geführt wird. Das Führungselement 16 ist gelenkig an dem Außengehäuse 4 befestigt. Das Führungselement 16 ist mehrteilig ausgeführt und umfasst einen Kraftspeicher 17, der die Drehbewegung bzw. die Schwenkbewegung des Drehgehäuses 7 unterstützt, um den Elektromotor 5 zu entlasten.

Um die Drehbewegung des Elektromotors 5 über das Zwischenrad 6 auf den Ausrückmechanismus des Kupplungsaktuators zu übertragen, steht das Zwischenrad 6 mit einem Zahnradsegment 18 in Eingriff. Das Zahnradsegment 18 ist an dem Außenumfang des Drehgehäuses 7 angeordnet.

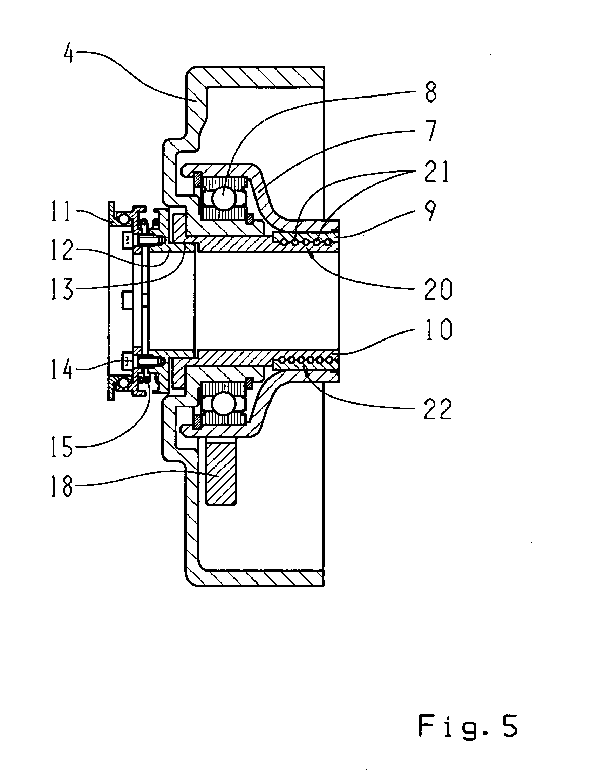

In der Fig. 5 sind die beiden Hülsenelemente 9 und 10 über einen Kugelumlaufspindelantrieb 20 miteinander verbunden. Die weiteren Bezugszeichen entsprechen der Fig. 2. Auch hier wird das Hülsenelement 9 angetrieben und bewirkt durch seine Verdrehung unter Beibehaltung der axialen Position, dass das Hülsenelement 10 axial verschoben wird. Dazu sind eine Vielzahl von Kugeln 21 in der Laufbahn 22 zwischen den Hülsenelementen 9 und 10 angeordnet und übertragen die Drehbewegung des Hülsenelementes 9 in die axiale Bewegung des Hülsenelementes 10.

### Bezugszeichen

- 1: Getriebegehäuse
- 2: Kupplung
- 3: Getriebewelle
- 4: Außengehäuse
- 5: Elektromotor
- 6: Zwischenrad
- 7: Drehgehäuse
- 8: Lager
- 9: erstes Hülsenelement
- 10: zweites Hülsenelement
- 11: Ausrücklager
- 12: Zwischenhülse
- 13: Innendurchmesserstufe
- 14: Befestigungsschraube
- 15: Feder
- 16: Führungselement
- 17: Kraftspeicher
- 18: Zahnradsegment
- 19, 19': rampenförmiger Verlauf
- 20: Kugelumlaufspindelantrieb
- 21: Kugel
- 22: Laufbahn

## Patentansprüche

1. Elektromechanischer Kupplungsaktuator (1) an einer Getriebewelle (3) zum Betätigen einer Kupplung (2) eines automatisierten Schaltgetriebes eines Fahrzeuges, mit einem Elektromotor (5) als Antrieb und einem die Drehbewegung des Elektromotors (5) in eine Axialbewegung des Ausrücklagers (11) der Kupplung (2) umwandelnden Ausrückmechanismus, der koaxial zur Getriebewelle (3) angeordnet ist, wobei der Ausrückmechanismus ein Drehgehäuse (7) umfasst, an dem ein erstes Hülsenelement (9) angeordnet ist, welches in axialer Richtung mit einem zweiten, korrespondierenden Hülsenelement (10) zum axialen Verschieben des Ausrücklagers (11) in Wirkverbindung steht, **dadurch gekennzeichnet, dass** an dem zweiten Hülsenelement (10) kupplungsseitig eine Zwischenhülse (12) angeordnet ist, welche überlappend an einer Innendurchmesserstufe (13) des zweiten Hülsenelements (10) anliegt.

2. Kupplungsaktuator nach Anspruch 1, **dadurch gekennzeichnet, dass** das Drehgehäuse (7) mit dem ersten Hülsenelement (9) an einem Außengehäuse (4) drehbar gelagert ist, und dass das zweite Hülsenelement (10) drehfest an dem Außengehäuse (4) gelagert ist, sodass das zweite Hülsenelement (10) durch die Drehung des ersten Hülsenelement (9) axial bewegbar ist.

3. Kupplungsaktuator nach Anspruch 1 oder 2, **dadurch gekennzeichnet, dass** die einander zugewandten axialen Stirnseitenbereiche der Hülsenelemente (9, 10) profiliert sind.

4. Kupplungsaktuator nach Anspruch 3, **dadurch gekennzeichnet, dass** jedes Hülsenelement (9.10) als Profilierung einen etwa rampenförmigen Verlauf (19, 19') an dem Stirnseitenbereich aufweist.

5. Kupplungsaktuator nach Anspruch 4, **dadurch gekennzeichnet, dass** die rampenförmigen Verläufe (19, 19') der einander zugewandten Stirnseitenbereiche der Hülsenelemente (9, 10) formschlüssig im Eingriff stehen.

6. Kupplungsaktuator nach Anspruch 1 oder 2, **dadurch gekennzeichnet,** da**s**s der Innenmantel des einen Hülsenelements (9, 10) und der Außenmantel des anderen Hülsenelementes (10, 9) profiliert sind.

7. Kupplungsaktuator nach Anspruch 6, **dadurch gekennzeichnet, dass** zwischen dem ersten und dem zweiten Hülsenelement (9, 10) ein Kugelumlaufspindelantrieb (20) ausgebildet ist.

8. Kupplungsaktuator nach Anspruch 1, **dadurch gekennzeichnet, dass** die Zwischenhülse (12) über zumindest ein Federelement (15) an dem Ausrücklager (11) der Kupplung (2) vorgespannt ist.

9. Kupplungsaktuator nach einem der vorangehenden Ansprüche, **dadurch gekennzeichnet, dass** der Abtrieb des Elektromotors (5) mit einem Zwischenrad (6) zum Antrieb des Drehgehäuses (7) gekoppelt ist.

10. Kupplungsaktuator nach einem der vorangehenden Ansprüche, **dadurch gekennzeichnet, dass** das Zwischenrad (6) mit einem Zahnradsegment (18) des Drehgehäuses (7) in Eingriff steht.

11. Kupplungsaktuator nach einem der vorangehenden Ansprüche, **dadurch gekennzeichnet, dass** das Drehgehäuse (7) mit einem Führungselement (16) verbunden ist, wobei das Führungselement (16) gelenkig an dem Außengehäuse (4) befestigt ist.

12. Kupplungsaktuator nach Anspruch 11, **dadurch gekennzeichnet, dass** das Führungselement (16) mit einem Kraftspeicher (17) zur Unterstützung der Drehbewegung des Drehgehäuses (7) ausgerüstet ist.

13. Kupplungsaktuator nach einem der vorangehenden Ansprüche, **dadurch gekennzeichnet, dass** der Elektromotor (5) an dem Außengehäuse (4) angeflanscht ist.

## Claims

1. Electromechanical clutch actuator (1) on a gearbox shaft (3) for actuating a clutch (2) of an automatic shift gearbox of a vehicle, having an electric motor (5) as a drive and having a release mechanism which converts the rotational movement of the electric motor (5) into an axial movement of the release bearing (11) of the clutch (2) and which is arranged coaxially with respect to the gearbox shaft (3), wherein the release mechanism comprises a rotary housing (7) on which is arranged a first sleeve element (9) which is operatively connected in the axial direction to a second, corresponding sleeve element (10) for the axial displacement of the release bearing (11), **characterized in that** an intermediate sleeve (12) is arranged on the second sleeve element (10) at the clutch side, which intermediate sleeve (12) bears, in an overlapping manner, against an inner diameter step (13) of the second sleeve element (10).

2. Clutch actuator according to Claim 1, **characterized in that** the rotary housing (7) with the first sleeve element (9) is rotatably mounted on an outer housing (4), and **in that** the second sleeve element (10) is rotationally fixedly mounted on the outer housing (4) such that the second sleeve element (10) can be moved axially as a result of the rotation of the first sleeve element (9).

3. Clutch actuator according to Claim 1 or 2, **characterized in that** the axial end side regions, which face towards one another, of the sleeve elements (9, 10) are profiled.

4. Clutch actuator according to Claim 3, **characterized in that** each sleeve element (9, 10) has an approximately ramp-shaped course (19, 19') as a profiling on the end side region.

5. Clutch actuator according to Claim 4, **characterized in that** the ramp-shaped courses (19, 19') of the end-side regions, which face towards one another, of the sleeve elements (9, 10) are in positively locking engagement.

6. Clutch actuator according to Claim 1 or 2, **characterized in that** the inner casing of one sleeve element (9, 10) and the outer casing of the other sleeve element (10, 9) are profiled.

7. Clutch actuator according to Claim 6, **characterized in that** a recirculating ball screw drive (20) is formed between the first and the second sleeve element (9, 10).

8. Clutch actuator according to Claim 1, **characterized in that** the intermediate sleeve (12) is preloaded against the release bearing (11) of the clutch (2) by means of at least one spring element (15).

9. Clutch actuator according to one of the preceding claims, **characterized in that** the drive output of the electric motor (5) is coupled to an intermediate gear (6) for driving the rotary housing (7).

10. Clutch actuator according to one of the preceding claims, **characterized in that** the intermediate gear (6) is in engagement with a toothed wheel segment (18) of the rotary housing (7).

11. Clutch actuator according to one of the preceding claims, **characterized in that** the rotary housing (7) is connected to a guide element (16), wherein the guide element (16) is articulatedly fastened to the outer housing (4).

12. Clutch actuator according to Claim 11, **characterized in that** the guide element (16) is equipped with a force store (17) for assisting the rotational movement of the rotary housing (7).

13. Clutch actuator according to one of the preceding claims, **characterized in that** the electric motor (5) is flange-mounted on the outer housing (4).

## Revendications

1. Actionneur d'embrayage électromécanique (1) sur un arbre de transmission (3), pour l'actionnement d'un embrayage (2) d'une transmission à changement de vitesses automatisée d'un véhicule, comprenant un moteur électrique (5) en tant qu'entraînement d'un mécanisme de débrayage convertissant le mouvement de rotation du moteur électrique (5) en un mouvement axial du palier de débrayage (11) de l'embrayage (2), lequel mécanisme de débrayage est disposé coaxialement à l'arbre de transmission (3), le mécanisme de débrayage comprenant un boîtier rotatif (7) sur lequel est disposé un premier élément de manchon (9) qui est en liaison fonctionnelle dans la direction axiale avec un deuxième élément de manchon correspondant (10) pour le déplacement axial du palier de débrayage (11), **caractérisé en ce qu'**un manchon intermédiaire (12) est disposé du côté de l'embrayage sur le deuxième élément de manchon (10), lequel manchon intermédiaire s'applique avec chevauchement contre un étage de diamètre intérieur (13) du deuxième élément de manchon (10).

2. Actionneur d'embrayage selon la revendication 1, **caractérisé en ce que** le boîtier rotatif (7) est monté à rotation avec le premier élément de manchon (9) sur un boîtier extérieur (4), et **en ce que** le deuxième élément de manchon (10) est monté de manière solidaire en rotation sur le boîtier extérieur (4), de sorte que le deuxième élément de manchon (10) puisse être déplacé axialement par la rotation du premier élément de manchon (9).

3. Actionneur d'embrayage selon la revendication 1 ou 2, **caractérisé en ce que** les régions axiales tournées l'une vers l'autre du côté frontal des éléments de manchon (9, 10) sont profilées.

4. Actionneur d'embrayage selon la revendication 3, **caractérisé en ce que** chaque élément de manchon (9, 10) présente en tant que profilage une étendue (19, 19') approximativement en forme de rampe au niveau de la région du côté frontal.

5. Actionneur d'embrayage selon la revendication 4, **caractérisé en ce que** les étendues en forme de rampe (19, 19') des régions tournées l'une vers l'autre du côté frontal des éléments de manchon (9, 10) sont en prise par engagement par correspondance géométrique.

6. Actionneur d'embrayage selon la revendication 1 ou 2, **caractérisé en ce que** l'enveloppe interne de l'un des éléments de manchon (9, 10) et l'enveloppe externe de l'autre élément de manchon (10, 9) sont profilées.

7. Actionneur d'embrayage selon la revendication 6, **caractérisé en ce qu'**entre le premier et le deuxième élément de manchon (9, 10) est réalisé un entraînement à broche à circulation de billes (20).

8. Actionneur d'embrayage selon la revendication 1, **caractérisé en ce que** le manchon intermédiaire (12) est précontraint par le biais d'au moins un élément de ressort (15) contre le palier de débrayage (11) de l'embrayage (2).

9. Actionneur d'embrayage selon l'une quelconque des revendications précédentes, **caractérisé en ce que** la sortie du moteur électrique (5) est accouplée à une roue intermédiaire (6) pour l'entraînement du boîtier rotatif (7).

10. Actionneur d'embrayage selon l'une quelconque des revendications précédentes, **caractérisé en ce que** la roue intermédiaire (6) est en prise avec un segment de roue dentée (18) du boîtier rotatif (7).

11. Actionneur d'embrayage selon l'une quelconque des revendications précédentes, **caractérisé en ce que** le boîtier rotatif (7) est connecté à un élément de guidage (16), l'élément de guidage (16) étant fixé de manière articulée au boîtier extérieur (4).

12. Actionneur d'embrayage selon la revendication 11, **caractérisé en ce que** l'élément de guidage (16) est équipé d'un accumulateur de force (17) pour supporter le mouvement de rotation du boîtier rotatif (7).

13. Actionneur d'embrayage selon l'une quelconque des revendications précédentes, **caractérisé en ce que** le moteur électrique (5) est bridé au niveau du boîtier extérieur (4).
